# EUROPEAN PATENT APPLICATION

(11) **EP 1 072 829 A1**
(43) Date of publication of application: **31.01.2001**
(21) Application number: 00903712.8
(22) Date of filing: 17.02.2000
(51) Int. Cl.: F16K 5/06, F16K 5/20

(54) **BALL VALVE WITH BOTTOM LID AND SUPPORT**

(30) Priority: 17.02.1999 ES 9900326
(71) Applicant: Gonzalez Salmeron, Mercedes, 46004 Valencia (ES)
(72) Inventor: Gonzalez Salmeron, Mercedes, 46004 Valencia (ES)
(74) Representative: Ungria Lopez, Javier
(86) International application number: ES0000056
(87) International publication number: WO0049316

(57) **Abstract**

The invention relates to a valve for fluids which basically comprises a tubular casing and a sealing axle that has a spherical portion fitted with a passage duct and is located in a central cavity in the casing in-between an inlet and an outlet. In addition, said spherical portion rests on two sealing joints. The novelty of the invention is essentially the advantageous structure of the sealing axle and the structure of the casing, which has a wide bottom opening to facilitate the insertion of the sealing axle assembly, said opening being then closed with a dismountable lid that also includes means for centering the sealing axle. The novelty of the invention is also the structure of the sealing joints.

## Description

### OBJECT OF THE INVENTION

The present invention, as expressed by the title of this description, refers to a valve for fluids designed for being inserted in a conduct or pipe through which there circulates a fluid, for the purpose of plugging, or not, a passage.

It basically comprises a tubular housing provided with an inlet mouth and an outlet mouth, there being inserted between both a plugging shaft which, depending on the position thereof, allows or not the passage of the fluid from the inlet mouth to the outlet mouth.

The novelty of the invention is centered essentially in the structure of the plugging shaft as well as in the means for coupling, assembly and fastening of said plugging shaft on the of tubular housing assembly.

The novelty of the invention also centers in a wide lower opening which the tubular housing has, to facilitate the insertion of the assembly of the plugging shaft and the further elements.

Another novelty of the invention is that said lower opening is closed with a cover that incorporates means for centering the plugging shaft.

Another novel characteristic of the invention relates to the profile or cross section of the two sealing joints between which there seats a spherical portion with a passing conduct that is part of the plugging shaft.

### BACKGROUND OF THE INVENTION

Presently, there are different types of valves for fluids that generally comprise a tubular housing in the inside of which there is coupled a passage and plugging shaft also including different sealing joints to avoid undesired escapes. For positioning the passage and plugging shaft, there is an outside drive fixed to said shaft.

Utility Model No. U-8902998 relates to a passage tap for fluids comprising a tubular housing the inside of which incorporates a spherical body being provided with an elbowed opening, that is governed by an outside drive linked to said spherical body in such a manner that in one position it plugs the inlet mouth or way for the fluid whilst, in another position it facilitates passage of the fluid from the inlet mouth to the outlet mouth.

Utility Model No. U-8902999 relates to a passage tap in which, whilst incorporating a spherical body for plugging or not the outlet mouth in the inside of its housing, said body possesses a straight and not an elbowed opening. Furthermore, the inlet way is in the same direction as the outlet way, this latter facilitating the circulation of the fluid when compared to the tap of Utility Model No. U-8902998 cited in the preceding paragraph.

Utility Model No. U-9201591 relates to a plugging shaft of one single piece having an advantageous structure by incorporating a lower body which is in charge of producing, depending on its position, the plugging and passage of the fluid. That body has a spherical configuration that has two parallel planes and an opening being perpendicular to said planes. Furthermore, this single-pieced shaft includes skirts for adjustment thereof in the tubular housing or body.

### DESCRIPTION OF THE INVENTION

The valve for fluids constituting the object of the invention has a series of important advantages in respect of other, conventional valves of the same kind, advantages which will be described hereafter:
- complementary machining is avoided;
- the closing mechanisms can be maximized in size thereby achieving a direct passage of fluid without any throttling portions, complying with the norms which presently establish or regulate the total passage of fluids in this kind of valves;
- assembly of the valve is very simple;
- all this results in a very substantial cost reduction.

The valve of the invention is made up of a tubular housing provided with an inlet mouth or way and an outlet mouth or way.

Between both ways, there is a central cavity wherein which there is housed a spherical body being an integral part of a plugging shaft incorporating a vertical portion being adjusted within a hollow extension of the housing with O-ring seals being interpositioned to avoid escapes. This vertical portion emerges into the outside for facilitating connection of an actuator drive.

The spherical body of the plugging shaft has two parallel planes and a passage conduct being perpendicular to said parallel planes.

In principle, the spherical body seats on two lateral sealing joints at the same time that it possesses a lower extension being adjusted within a complementary casing established in a detachable part or cover being installed in correspondence with a wide lower opening of the housing.

The plugging shaft unit, as well as the lateral sealing joints are mounted by being inserted through the lower opening of the housing. Once this operation has been made, the lower part fitting with the lower extension of the spherical body is mounted.

The hollow extension of the housing which extends upwards, possesses an annular seat where the plugging shaft unit is abutting axially.

Thus, depending on the rotating position of the plugging shaft unit, it will allow, or not, the passage of the fluid from the inlet way to the outlet way.

On the other hand, it may be pointed out that the spherical body of the plugging shaft does only fall on the sealing joints in a plugging position. Thus, said joints must have sufficient stability in the opening position so that they are not moved away from their positions during the plugging process. Therefor, the joints are housed in annular seats or channels of the housing, at the same time that said joints have an advantageous profile or cross-section.

On the other hand the plugging shaft may also be constituted of two pieces, whereby the spherical body will be manufactured of a plastic material whilst the vertical portion of the shaft will be constituted by a metal piece.

Hereafter, to facilitate a better understanding of this description and forming an integral part thereof, accompanied are figures in which the object of the invention has been represented with an illustrative and non-limiting character.

### BRIEF DESCRIPTION OF THE DRAWINGS

**Figure 1.**- represents an elevational sectional view of the valve unit for fluids being the object of the invention. In this figure, the valve is in an open position.
**Figure 2.-** represents a sectional top plan view of the valve of the invention. In this figure, there is represented an open position and also a closed position this latter being defined by discontinuous lines.

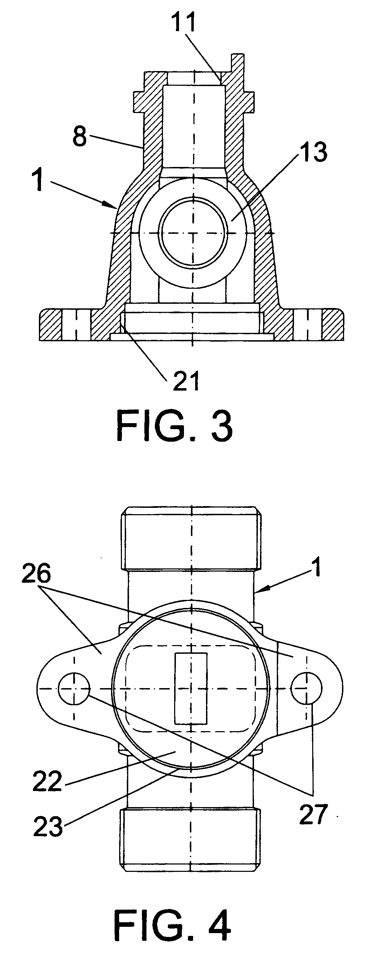

**Figure 3.-** represents a sectional view of a housing being part of the valve unit of the invention.
**Figure 4.-** represents a top plan view of the housing of the valve.
**Figure 5.-** represents a sectional view of one of the two sealing joints whereon there seats the spherical body being integral with a plugging shaft which is part of the valve unit of the invention.
**Figure 6.-** represents a sectional view of the lower portion of the valve unit of the invention. Essentially a conical coupling of the lower portion of the plugging shaft is shown therein.
**Figure 7.-** represents a sectional view comprised of two pieces: one of plastic material and the other of metal.

### DESCRIPTION OF THE PREFERRED EMBODIMENT

With reference to the numeration adopted in the figures, the valve for fluids comprises a tubular housing 1 provided with an inlet way or mouth 2 and an outlet way or mouth 3, both arranged into the same direction. In the inside of the tubular housing 1 and between both ways 2 and 3, there is a central cavity 4 wherein there is housed a spherical body 5 being an integral part of a plugging shaft 6 which includes a vertical portion 7 adjusted in the inside of a co-tubular, cylindrical hollow prolongation 8 which is part of the housing 1.

The vertical portion 7 of the plugging shaft 6 includes annular grooves 9 wherein there are housed respective O-ring seals 10 that contact against the inner surface of the cylindrical-tubular prolongation 8 so as to avoid possible escapes of fluid. Furthermore, the free end of the cylindrical tubular prolongation 8 has an inner annular projection 11 where said vertical portion 7 of shaft 6 abuts axially, a vertical portion which extends outwards as an outer portion 12 so as to facilitate the connection of an actuator drive that is not represented in the figures.

In the central cavity 4 there are two annular seats or recesses 13 in which two lateral sealing joints 14 are housed on which, in principle, there seats the spherical body 5 of the plugging shaft 6. Said spherical body 5 has two parallel planes 15 and a throughgoing conduct 16 being perpendicular to said parallel planes 15. The sealing joints 14 interiorly abut against a rib 17 originated as a consequence of the machining of the annular recesses 13.

The plugging shaft 6 includes a lower extension 18 or 19 being integral with the spherical portion 5 adjusted within a complementary casing 20 or 21 established in a detachable cover or piece 22 coupled in correspondence with a wide lower opening 23 of the housing 1, said lower opening 23 being opposed to the hollow prolongation 8 and the central cavity 4 of the housing 1; said lower opening 23 being aimed to facilitate introduction of the plugging shaft 6 unit as well as of the sealing joints 14.

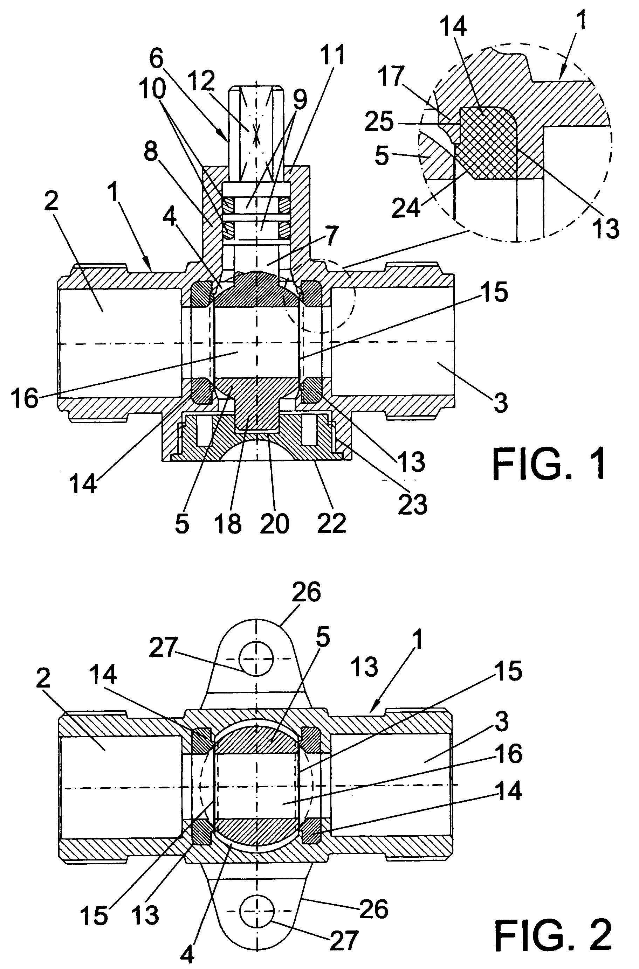

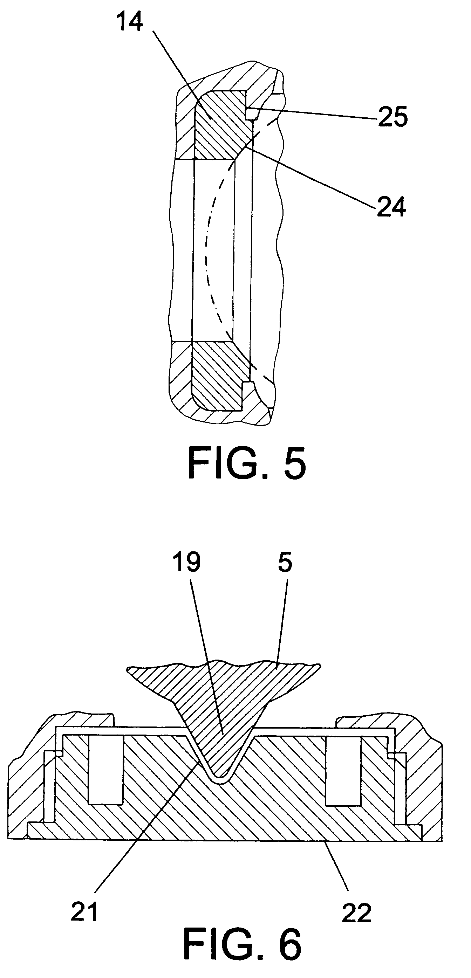

As shown in figure 1, the lower extension 18 and the complementary casing 20 are of a cylindrical configuration. In turn, as shown in figure 6, the lower extension 19 and the complementary casing 21 are of a conical configuration.

The lateral sealing joints 14 have an advantageous structure which we shall explain hereafter. In the first place, each of these joints 14 includes a concavely curved seat 24 whereon there complementarily rests the surface of the spherical body 5 of the plugging shaft 6 only in the closed position of the valve, as in the open position the spherical body 5 does not reach to contact with said concavely curved seat 24 nor with any other part of the sealing joints 14.

The cited concavely curved seat 24 is established in the inner side of the joints 14 in correspondence with the smallest diameter thereof. This inner side of the seat 24 of joints 14 contacts with the spherical body of shaft 6.

In the second place, the sealing joints 14 include an angular cut 25 established at the outer side of said joints 14 and originated as from the largest diameter thereof of said joints 14. This angular cut 25 complementarily fits with the annular rib 17 corresponding with the recess 13 where the respective joint 14 is housed, this latter abutting against said annular rib 17 by its outer side.

The introduction of the plugging shaft 6 will be carried out by positioning its parallel planes into correspondence with the sealing joints 14. In this way, said introduction is substantially facilitated inasmuch the spherical body 5 of the plugging shaft 6 will not contact against the sealing joints 14 and thus, these latter ones will not offer any resistance against the penetration or introduction of the plugging shaft unit 6.

The housing 1 has wings 26 having respective throughgoing holes 27 to facilitate fixing of the valve unit of the invention.

With the aforedescribed arrangement, the plugging shaft 6 can be rotated with the actuator drive to position the same in the desired situation, may that be an open position where the inlet way 2 communicates with the outlet way 3 through the throughgoing intermediate conduct 16 of the spherical body 5, or a closed position wherein the two ways 2 and 3 of the housing 1 are opposed to the curved surfaces of the spherical body; curved surfaces which, only in the closed position, rest on the concavely curved seats 24 of the sealing joints 14.

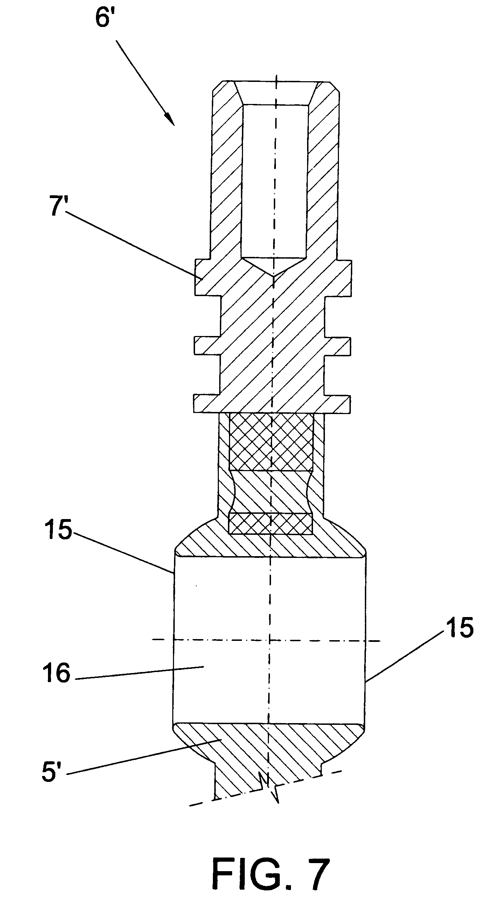

On the other hand, according to figure 7, the plugging shaft 6' can be constituted of two pieces, whereby the spherical body 5' of said shaft will be manufactured by plastic molding whilst the vertical portion 7' of the plugging shaft 6 will be constituted by a metal piece.

The junction between both pieces 5' and 7' is produced and carried out essentially during the injection or molding process of the plastic piece 5'.

By manufacturing the plugging shaft in this way, we avoid the machining of gross metal pieces that forces to waste much material. Furthermore, the very plastic nature of the spherical plugging body allows to elect different plastic compounds being suitable for the fluids with which the respective valve may be utilized, thereby securing a longer duration and an optimization of the plugging element.

## Claims

1. Valve for fluids comprising a housing with an inlet way or mouth and an outlet way or mouth, between which there is a central cavity having two annular recesses in which there rest and fit respective sealing joints whereon there seats a spherical body having a throughgoing conduct and which is a part of a plugging shaft further including an upper portion fitted in a tubular prolongation of the housing with interpositioning of O-ring seals contacting on the inner surface of said tubular prolongation, characterized in that the spherical body or portion (5,5') of the plugging shaft (6,6') includes a lower protuberance adjusted in a complementary casing; all this in order to facilitate rotation of the plugging shaft for opening and closing the valve.

2. Valve for fluids according to the previous claim, characterized in that the tubular housing (1) has a wide lower opening (21) opposed to the tubular prolongation (8), there being coupled within said opening (21) a piece or cover (22) provided with the casing being complementary to the lower protuberance being part of the plugging shaft (6,6') which is introduced into the inside of the housing through the wide lower opening (21).

3. Valve for fluids according to the previous claims, characterized in that the lower protuberance (18) of the plugging shaft (6,6') as well as the complementary casing (21) have a cylindrical configuration.

4. Valve for fluids according to claims 1 and 2, characterized in that the lower protuberance (19) of the plugging shaft (6,6') as well as the complementary casing (21) have a conical configuration.

5. Valve for fluids according to claim 1, characterized in that the sealing joints (14) include a concavely curved perimetral seat (24) where the curved surface of the spherical body (5,5') of the plugging shaft (6,6') seats and presses only in the closed position of the valve unit.

6. Valve for fluids according to claim 1, characterized in that the sealing joints (14) include an angular cut (25) abutting against an annular rib (17) which internally limits the recess (13) housing each of the sealing joints (14).

7. Valve for fluids according to claim 5, characterized in that the concavely curved seat (24) is established in correspondence with the smallest diameter of the sealing joints (14).

8. Valve for fluids according to claim 6, characterized in that the angular cut (25) is established over the outer side of the sealing joints (14), said cut (25) starting as from the outer diameter of these joints (14).

9. Valve for fluids according to claim 1, characterized in that the free end of the tubular prolongation (8) includes an annular inner projection (11) for axial abutment of the upper portion (7) of the plugging shaft (7).

10. Valve for fluids according to clam 1, characterized in that the plugging shaft (6') comprises two pieces: one of a plastic material being constitutive of the spherical body (5') and a metal piece constitutive of the upper portion (7') which is also a part of the plugging shaft (6') unit.

11. Valve for fluids according to the previous claim, characterized in that the junction between the plastic piece (5') and the metal piece (7') of the plugging shaft (6') is produced and made during the process of injection or molding of the plastic piece (5').
